(19)

Europäisches
Patentamt

European
Patent Office

Office européen
des brevets

(11)  **EP 4 521 488 A2**

(12)     **EUROPEAN PATENT APPLICATION**

(43) Date of publication:
   **12.03.2025  Bulletin 2025/11**

(21) Application number: **24197194.4**

(22) Date of filing: **29.08.2024**

(51) International Patent Classification (IPC):
   $H01M\ 4/36^{(2006.01)}$   $H01M\ 4/525^{(2010.01)}$
   $H01M\ 4/62^{(2006.01)}$   $H01M\ 10/052^{(2010.01)}$

(52) Cooperative Patent Classification (CPC):
   **H01M 4/366; H01M 4/525; H01M 4/62;
   H01M 10/052**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority:  **05.09.2023  KR 20230117829**

(71) Applicant: **SK On Co., Ltd.**
   **Seoul 03161 (KR)**

(72) Inventors:
   • **CHOI, Ji Hoon**
     **34124 Daejeon (KR)**
   • **KWEON, Hee Jun**
     **34124 Daejeon (KR)**
   • **KIM, Jik Soo**
     **34124 Daejeon (KR)**

(74) Representative: **Prüfer & Partner mbB
   Patentanwälte · Rechtsanwälte
   Sohnckestraße 12
   81479 München (DE)**

(54)   **CATHODE ACTIVE MATERIAL FOR LITHIUM SECONDARY BATTERY, METHOD OF
       PREPARING THE SAME AND LITHIUM SECONDARY BATTERY INCLUDING THE SAME**

(57)   A cathode active material for a lithium secondary battery includes an active material particle. The active material particle includes an active material core including a lithium metal oxide, and a sulfur-containing coating and a metal-containing coating formed on the active material core. A charge transfer resistance ($R_{ct}$) measured at 50% DOD (Depth of Discharge) by an individual contact of a measuring probe with the active material particle is 60 $\Omega/cm^2$ or less.

## FIG. 1

EP 4 521 488 A2

**Description**

TECHINICAL FIELD

The disclosure of this patent application relates to a cathode active material for a lithium secondary battery, a method of preparing the same and a lithium secondary battery including the same. More particularly, the disclosure of this patent application relates to a cathode active material including a lithium metal oxide, a method of preparing the same and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery include a lithium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

The lithium secondary battery may include an electrode assembly including repeatedly stacked cathodes and anodes. The electrode assembly may further include a separator disposed between the cathode and the anode, and an electrolyte solution impregnating the electrode assembly.

A lithium metal oxide may be used as a cathode active material of the lithium secondary battery. Examples of the lithium metal oxide above may include a nickel-based lithium metal oxide.

As an application range of the lithium secondary battery is expanded, a longer life-span, higher capacity and improved operation stability are required. Accordingly, a cathode active material capable of providing the higher capacity is being developed and applied. Further, a cathode active material having a high lithium ion mobility and a low surface resistance is being developed to implement a high-power secondary battery.

However, the cathode active material having the above-mentioned properties may cause chemical instability may increase. For example, impurities and unreacted residues may be present on a particle surface of the cathode active material particle. In this case, defects such as gas generation and explosion may be caused by, e.g., side reactions with the electrolyte solution.

SUMMARY

According to an aspect of the present disclosure, there is provided a cathode active material for a lithium secondary battery having improved electrical and electrochemical properties.

According to an aspect of the present disclosure, there is provided a method of preparing a cathode active material for a lithium secondary battery having improved electrical and electrochemical properties.

According to an aspect of the present disclosure, there is provided a lithium secondary battery having improved electrical and electrochemical properties.

A cathode active material for a lithium secondary battery includes an active material particle. The active material particle includes an active material core including a lithium metal oxide, and a sulfur-containing coating and a metal-containing coating formed on the active material core. A charge transfer resistance ($R_{ct}$) measured at 50% DOD (Depth of Discharge) by an individual contact of a measuring probe with the active material particle is 60 $\Omega/cm^2$ or less.

In some embodiments, the metal-containing coating may include at least one of tungsten (W), molybdenum (Mo), niobium (Nb) and tantalum (Ta).

In some embodiments, the sulfur-containing coating may include a lithium-containing sulfur oxide, and the metal-containing coating includes a lithium-tungsten oxide.

In some embodiments, a content of sulfur based on a weight of the active material core may be in a range from 100 ppm to 5,000 ppm, and a content of a metal contained in the metal-containing coating based on the weight of the active material core may be in a range from 1,000 ppm to 9,000 ppm.

In some embodiments, a content of sulfur based on a weight of the active material core may be in a range from 1,000 ppm to 5,000 ppm, and a content of the metal contained in the metal-containing coating based on the weight of the active material core may be in a range from 2,000 ppm to 8,000 ppm.

In some embodiments, the active material particle may have a form of a secondary particle in which a plurality of primary particles are aggregated, and the sulfur-containing coating and the metal-containing coating may be formed on an outer surface of the secondary particle.

In some embodiments, the sulfur-containing coating and the metal-containing coating may also be formed between the primary particles at an inside of the secondary particle.

In some embodiments, a coating amount on the outer surface of the secondary particle of the sulfur-containing coating and the metal-containing coating may be greater than that between the primary particles.

In some embodiments, $R_{ct}$ of the active material particle may be in a range from 30 $\Omega/cm^2$ to 60 $\Omega/cm^2$.

In some embodiments, the active material core may include a lithium-nickel metal oxide, and a mole fraction of nickel based on the total number of moles of metals excluding lithium and oxygen in the lithium-nickel metal oxide may be 0.8 or more.

A lithium secondary battery includes a cathode including the above-described cathode active material for a lithium secondary battery, and an anode facing the cathode.

In a method of preparing a cathode active material for a lithium secondary battery, an active material core particle including a lithium metal oxide is prepared. A sulfur source and a metal source are mixed with the active material core particle together with 10 wt% or less of water based on a weight of the active material core particle to form a mixture. The mixture is heat-treated.

In some embodiments, the heat-treating may be performed without a filtration after forming the mixture.

In some embodiments, the sulfur source may include a sulfur compound containing an ammonium group, and the metal source may include a metal compound containing an ammonium group.

In some embodiments, a content of water used in the formation of the mixture may be 5 wt% or less based on the weight of the active material core particle.

According to the above-described embodiments, a charge transfer resistance ($R_{ct}$) of individual particles of a cathode active material may be maintained in a predetermined range. Thus, desired inherent electrochemical properties of the cathode active material may be realized while excluding influence of other components such as a binder, a conductive material, etc., included in a battery and an electrode and a structural transformation of the battery during charging/discharging.

A sulfur-containing coating and a metal-containing coating may be formed on surfaces of the individual particles. A lithium mobility and an electrical conductivity of the cathode active material may be improved by adjusting contents of the sulfur-containing coating and the metal-containing coating in a predetermined range.

In example embodiments, the coating may be formed through a semi-wet process. Accordingly, the sufficient lithium mobility and electrical conductivity may be provided by reducing impurities on the surface of the active material while preventing deformation of a crystal structure of the active material caused by a wet coating.

The cathode active material and the lithium secondary battery of the present disclosure may be widely applied in green technology fields such as an electric vehicle, a battery charging station, a solar power generation, a wind power generation, etc., using a battery, etc. The cathode active material and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIG. 1 is a schematic diagram for explaining a method and a device for measuring a charge transfer resistance of an individual particle of a cathode active material.

FIG. 2 and FIG. 3 are a schematic plan view and a cross-sectional view, respectively, illustrating a lithium secondary battery in accordance with example embodiments.

FIG. 4 is a graph for explaining a method of applying a charging pulse at each DOD for measuring a charge transfer resistance.

FIGS. 5 and 6 are graphs of a charge transfer resistance ($R_{ct}$) and a lithium diffusion coefficient ($D_{Li}$) for each DOD measured using a cathode active material of Example 1, respectively.

FIG. 7 is a graph showing charge transfer resistances for each DOD of Examples and Comparative Examples.

FIGS. 8 and 9 are transmission electron microscopy (TEM) images of inner cross-sections of active material particles of Example 1 and Comparative Example 5, respectively.

DETAILED DESCRIPTION OF THE EMBODIMENTS

According to embodiments disclosed in the present application, a lithium-nickel-based cathode active material including a surface coating and a lithium secondary battery including the same are provided.

Hereinafter, the present disclosure will be described in detail with referenced to the attached drawings and example embodiments.

<Cathode Active Material for Lithium Secondary Battery>

A cathode active material for a lithium secondary battery (hereinafter, that may be abbreviated as a cathode active material) according to embodiments of the present invention may include an active material particle including a lithium metal oxide capable of reversibly intercalating and de-intercalating lithium ions.

The cathode active material according to embodiments of the present disclosure may include a plurality of active material particles. Each of the individual active material particles may include an active material core including a lithium metal oxide and a surface coating including a sulfur-containing coating and a metal-containing coating formed on a surface of the active material core. The surface coating may cover at least a portion of an outer surface of the active material core.

In some embodiments, a content of the active material particles base on a total weight of the cathode active material may be 50 weight percent (wt%) or more, 60 wt% or more, 70 wt% or more, 80 wt% or more, or 90 wt% or more. In an embodiment, the cathode active material may substantially consist of the active material particles.

In an embodiment, the surface coating may partially cover the surface of the active material core, and may be distributed to be spaced apart from each other in the form of a plurality of islands. In an embodiment, the surface coating may have a continuous single layer shape, and may entirely cover the active material core.

In some embodiments, the sulfur-containing coating may include a lithium-containing-sulfur oxide. For example, the sulfur-containing coating may include a compound represented by Chemical Formula 1 below.

[Chemical Formula 1] $Li_aM_bS_cO_d$

In Chemical Formula 1, $1\leq a\leq5$, $0<b<4$, $1\leq c\leq4$, and $1\leq d\leq8$. M may include Na or K.

For example, the sulfur-containing coating may include $Li_2SO_4$, $LiNaSO_4$, $LiKSO_4$, $Li_2S_2O_3$, etc. In an embodiment, the sulfur-containing coating may include $Li_2SO_4$.

A metal included in the metal-containing coating may refer to a metal excluding lithium or a metal element excluding lithium, nickel, cobalt and manganese. In some embodiments, the metal-containing coating above may include a compound represented by Chemical Formula 2 below.

[Chemical Formula 2] $Li_aM_bO_c$

In Chemical Formula 2, $1\leq a\leq6$, $0<b\leq3$, and $1\leq c\leq9$. For example, in Chemical Formula 2, $1\leq a\leq6$, $1\leq b\leq3$, and $2\leq c\leq9$. M may include at least one metal element from W, Mo, Nb and Ta.

In some embodiments, the metal-containing coating may include tungsten. In this case, the metal-containing coating may include a lithium-tungsten oxide. In an embodiment, the metal-containing coating may include $Li_2W_2O_7$, $Li_6W_2O_9$, $Li_4WO_5$, $Li_2WO_4$, $Li_2WO_3$, $Li_5W_2O_7$, etc.

The sulfur-containing coating may increase an ion conductivity of the cathode active material. Accordingly, lithium diffusion characteristics through the cathode active material may be improved, thereby improving capacity characteristics of a lithium secondary battery.

The metal-containing coating may increase an electrical conductivity of the cathode active material. Accordingly, charge transfer characteristics of the cathode active material may be improved and a resistance may be reduced. Thus, power characteristics of the lithium secondary battery may be improved.

As described above, the sulfur-containing coating and the metal-containing coating may be present on the surface of the cathode active material to improve both the ion conductivity and the electrical conductivity.

For example, the surface coating may act as a barrier against a side reaction of the cathode active material or the active material particles with an electrolyte solution. As described above, unreacted lithium sources may be dissolved or transferred to the surface of the active material particles including the lithium metal oxide to be present as impurities. For example, the impurity may include $Li_2CO_3$ and/or $LiOH$.

For example, $Li_2CO_3$ may be decomposed according to Equation 1 below to produce $CO_2$, or may react with HF derived from the electrolyte solution according to Equation 2 to generate $CO_2$.

$$[\text{Equation 1}] \quad Li_2CO_3 \rightarrow 2Li^+ + 2e^- + 0.5O_2 + CO_2(\uparrow)$$

$$[\text{Equation 2}] \quad Li_2CO_3 + 2HF \rightarrow 2LiF + H_2O + CO_2(\uparrow)$$

In example embodiments, a sulfur component and a metal component may react with a residual lithium to form the above-described sulfur-containing coating and metal-containing coating. Thus, generation of $Li_2CO_3$ on the surface of the active material particles may be blocked or reduced.

In some embodiments, a sulfur source (e.g., $(NH_4)_2SO_4$) for forming the sulfur-containing coating may react with the residual lithium according to Equations 3 and 4 below to reduce the residual lithium to provide relatively improved gas generation inhibition performance.

$$[\text{Equation 3}] \; (NH_4)_2SO_4 + 2LiOH + H_2O \rightarrow Li_2SO_4 + 2NH_3$$

$$[\text{Equation 4}] \; (NH_4)_2SO_4 + Li_2CO_3 + 2H_2O \rightarrow Li_2SO_4 + 2NH_3 + CO_2$$

In some embodiments, a metal source (e.g., $(NH_4)_{10}H_2(W_2O_7)_6$) for forming the metal-containing coating may react with the residual lithium according to Equations 5 and 6 below to reduce the residual lithium.

$$(NH_4)_{10}H_2(W_2O_7)_6 \cdot 4H_2O + 24LiOH \rightarrow 12Li_2WO_4 + 22H_2O + 10NH_3 \qquad [\text{Equation 5}]$$

$$(NH_4)_{10}H_2(W_2O_7)_6 \cdot 4H_2O + 6Li_2CO_3 \rightarrow 6Li_2W_2O_7 + 6CO_2 + 10H_2O + 10NH_3 \qquad [\text{Equation 6}]$$

As described above, the metal-containing coating may be formed together with the sulfur-containing coating having improved ion conductivity and gas suppression characteristics to supplement the electrical conductivity and additionally reduce the residual lithium.

In some embodiments, a content of sulfur (S) in the cathode active material measured by an inductively coupled plasma (ICP) may be in a range from 100 ppm to 5,000 ppm. In an embodiment, the content of sulfur measured by the ICP may be in a range from 500 ppm to 5,000 ppm, from 1,000 ppm to 5,000 ppm, from 1,000 ppm to 4,000 ppm, or from 1,000 ppm to 3,000 ppm.

In some embodiments, a content of the metal (W, Mo, Nb and/or Ta) in the cathode active material measured by the ICP may be in a range from 1,000 ppm to 9,000 ppm. In an embodiment, the content of the metal measured by the ICP may be in a range from 1,000 ppm to 8,000 ppm, from 2,000 ppm to 8,000 ppm, from 2,000 ppm to 7,000 ppm, or from 3,000 ppm to 7,000 ppm.

In the above range, balanced improvements of the ion conductivity and the electrical conductivity of the cathode active material may be implemented, and the residual lithium and the gas generation may be sufficiently reduced.

In example embodiments, the active material particle or the active material core may have a secondary particle structure in which a plurality of primary particles are aggregated. For example, the active material particle may have a morphological structure in which a plurality of primary particles are substantially aggregated within a single secondary particle. For example, the secondary particle may be an aggregate of more than 10, 20, 30, 40, 50, 70, or 100 primary particles.

For example, a boundary of the secondary particle may be observed through a cross-sectional image of a scanning electron microscope (SEM), and cross-sections of multiple primary particles may be observed within the boundary.

The above-described sulfur-containing coating and the metal-containing coating may be formed on an outer surface of the secondary particle. Accordingly, the side reactions and the gas generation occurring on the outer surface may be effectively prevented while reducing a contact resistance between the active material particles.

In some embodiments, the sulfur-containing coating and the metal-containing coating may be partially present between the primary particles in an inner region of the secondary particle. Accordingly, a resistance at an interface between the primary particles may be reduced, and an adhesion between the primary particles may be enhanced.

In some embodiments, an amount of the surface coating present on the outer surface may be greater than an amount of the surface coating present between the primary particles. For example, an amount of sulfur and an amount of the metal measured on the outer surface may be greater than those measured between the primary particles.

In example embodiments, the active material core may include a lithium-nickel metal oxide. The lithium-nickel metal oxide may further include at least one of cobalt (Co), manganese (Mn) and aluminum (Al).

In some embodiments, the active material core or the lithium-nickel metal oxide may have a layered structure or a crystal structure represented by Chemical Formula 3.

[Chemical Formula 3] $\qquad Li_pNi_qT_rO_{2+s}$

In Chemical Formula 3, $0.9 \leq p \leq 1.2$, $0.6 \leq q \leq 0.99$, $0.01 \leq r \leq 0.4$, and $-0.5 \leq s \leq 0.1$. As described above, T may include Co, Mn and/or Al.

The chemical structure of Chemical Formula 3 represents a bonding relationship included in the layered structure or the crystal structure of the cathode active material, and is not intended to exclude an additional element. For example, M may include Co and/or Mn, and Co and Mn may be provided as main active elements of the cathode active material together with Ni. Chemical Formula 3 is provided to express the bonding relationship of the main active elements, and is to be understood as encompassing introduction and substitution of the additional element.

In an embodiment, an auxiliary element for enhancing chemical stability of the cathode active material or the layered structure/crystal structure may be further included in addition to the main active element. The auxiliary element may be mixed together in the layered structure/crystal structure to form a bond, and this case is to be understood as being included within the range of the chemical structure represented by Chemical Formula 3.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may function as an auxiliary active element such as Al contributing to the capacity/power of the cathode active material together with Co or Mn.

For example, the active material core or the lithium-nickel metal oxide may include a layered structure or a crystal structure represented by Chemical Formula 3-1.

$$[\text{Chemical Formula 3-1}] \qquad Li_pNi_qM1_{r1}M2_{r2}O_{2+s}$$

In Chemical Formula 3-1, M1 may include Co, Mn and/or Al. M2 may include the above-described auxiliary element. In Chemical Formula 3-1, $0.9 \leq p \leq 1.2$, $0.6 \leq q \leq 0.99$, $0.01 \leq r1+r2 < 0.4$, and $-0.5 \leq s \leq 0.1$.

The cathode active material may further include a coating element or a doping element. For example, elements substantially the same as or similar to the above-described auxiliary elements may be used as a coating element or a doping element. For example, one of the above-described elements or a combination of two or more therefrom may be used as the coating element or the doping element.

The coating element or the doping element may be present on the surface of the active material core, or may penetrate through the surface of the active material core to be included in the bonding structure represented by Chemical Formula 3 or 3-1.

The active material core may include a nickel-cobalt-manganese (NCM)-based lithium oxide. In this case, an NCM-based lithium oxide having an increased nickel content may be used.

Ni may serve as a transition metal associated with the power and the capacity of the lithium secondary battery. Thus, as described above, a high-Ni composition may be employed as the cathode active material, so that a high-capacity cathode and a high-capacity lithium secondary battery may be provided.

However, as the Ni content increases, long-term storage stability and life-span stability of the cathode or the secondary battery may be relatively lowered, and the side reactions with the electrolyte solution may also be increased. However, according to example embodiments, life-span stability and capacity retention characteristics may be improved by using Mn while maintaining electrical conductivity by using Co.

The content of Ni in the NCM-based lithium oxide (e.g., a mole fraction of nickel based on the total number of moles of nickel, cobalt and manganese) may be 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may further include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may further include, e.g., a Mn-rich active material having a chemical structure or a crystal structure represented by Chemical Formula 4, a Li-rich layered oxide (LLO)/OLO (over lithiated oxide) active material, and a Co-less active material.

For example, the active material core may include a chemical or crystal structure represented by Formula 4 below.

$$[\text{Chemical Formula 4}] \qquad m[Li_2MnO_3]\text{-}(1\text{-}m)[Li_nJO_2]$$

In Chemical Formula 4, $0 < m < 1$, $0.9 < n < 1.2$, and J may include at least one element from Mn, Ni, Co, Fe, Cr, V, Cu, Zn, Ti, Al, Mg and B.

A charge transfer resistance ($R_{ct}$) of each of individual active material particles included in the cathode active material according to embodiments of the present disclosure may be 60 $\Omega/cm^2$ or less. In some embodiments, the charge transfer resistance of each of the individual active material particles of the cathode active material may be less than 60 $\Omega/cm^2$. In an embodiment, the charge transfer resistance of the cathode active material may be 55 $\Omega/cm^2$ or less, or 50 $\Omega/cm^2$ or less.

In an embodiment, the charge transfer resistance of the cathode active material may be 30 $\Omega/cm^2$ or more. For example, the charge transfer resistance of the cathode active material may be in a range from 30 $\Omega/cm^2$ to 60 $\Omega/cm^2$, from 30 $\Omega/cm^2$ to 55 $\Omega/cm^2$, or from 30 $\Omega/cm^2$ to 50 $\Omega/cm^2$.

In the above range, sufficient electrical conductivity may be achieved without degrading the ion conductivity of the cathode active material while preventing the gas generation reduction characteristics.

In example embodiments, a lithium diffusion coefficient ($D_{Li}$) of each of the individual active material particles of the cathode active material may be $2*10^{-9}$ cm$^2$/s or more. In some embodiments, the lithium diffusion coefficient of each of the individual active material particles of the cathode active material may be $2.10*10^{-9}$ cm$^2$/s or more, or $2.20*10^{-9}$ cm$^2$/s or more.

In an embodiment, the lithium diffusion coefficient of the cathode active material above may be $5.00*10^{-9}$ cm$^2$/s or less. For example, the lithium diffusion coefficient of the cathode active material above may be in a range from $2.10*10^{-9}$ cm$^2$/s to $5.00*10^{-9}$ cm$^2$/s or less. Accordingly, sufficient ion conductivity may be achieved together with an increased electrical conductivity.

As described above, the charge transfer resistance and the lithium diffusion coefficient according to the present disclosure may be measured from each of the active material particles.

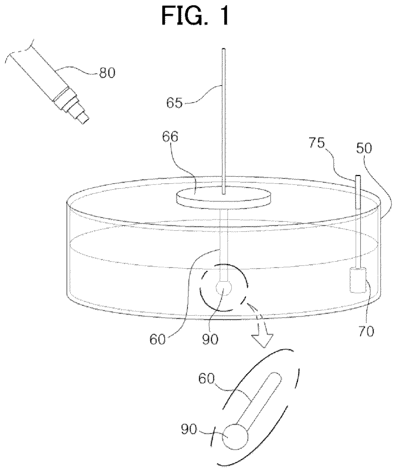

FIG. 1 is a schematic diagram for explaining a method and a device for measuring a charge transfer resistance of an individual particle of a cathode active material.

Referring to FIG. 1, a measurement probe 60 and a counter electrode 70 may be installed in a measurement bath 50 into which an electrolyte solution is injected. A tip of the measurement probe 60 and the counter electrode 70 may be immersed in the electrolyte solution.

For example, the measurement probe 60 may be a micro-electrode coated with gold (Au). A lithium foil may be used as the counter electrode 70.

The measurement probe 60 and the counter electrode 70 may be connected to a first current collector 65 and a second current collector 75, respectively, so that a measurement current or a measurement pulse may be applied thereto. End portions of the first current collector 65 and the second current collector 75 may be exposed to an outside of the measurement bath. The first current collector 65 may be fixed at an upper portion or a lid of the measurement bath 50 using a sealing material 66 and may be connected to the measurement probe 60.

The active material particles of the above-described cathode active material may be added to the electrolyte solution. For example, the active material particles may be dispersed on a filter sheet, and then may be immersed in the electrolyte solution in the bath.

Thereafter, a contact between the measurement probe 60 and the individual active material particle 90 may be checked using a microscope 80, and a charge/discharge pulse may be applied to measure the charge transfer resistance and the lithium diffusion coefficient of the individual active material particle 90.

According to the above-described embodiments, the charge transfer resistance at an individual active material particle level that is not a cathode active material layer level or a cathode level may be adjusted. Thus, inherent resistance characteristics of the active material particles may be measured and utilized excluding influence of other components such as a conductive materials and a binder other than the active material particles.

Further, resistance fluctuations caused by physical variables such as a thickness of the cathode, a porosity of the cathode active material layer, and chemical variables such as a composition of the electrolyte solution may be excluded, and inherent ion/charge characteristics of the desired cathode active material may be controlled.

In example embodiments, a charge/discharge pulse may be applied in each DOD state while adjusting to a plurality of depth of discharge (DOD) states from a state of charge (SOC) state 100%.

The charge transfer resistance ($R_{ct}$) and a lithium mobility (lithium diffusion coefficient: $D_{Li}$) for each DOD can be calculated by applying a pulse measurement method in each DOD state and performing a Tafel plot according to the applied current.

For example, the charge transfer resistor $R_{ct}$ is defined by Equation (1) below.

$$R_{ct} = \frac{RT}{Fi_0} \quad \ldots\ldots(1)$$

In Equation (1), F is a Faraday constant, R is a gas constant, T is an absolute temperature, and $i_0$ is an exchange current density.

For example, the Tafel plot may be measured according to a magnitude of each charge/discharge pulse at 50% DOD, and $i_0$ in Equation (1) may be calculated by Equation (2-1) or (2-2) below using the value measured from the Tafel plot. The calculated $i_0$ may be substituted into Equation (1) to obtain the charge transfer resistance.

$$\log i = \log i_0 + \frac{(1-\alpha)F}{2.303RT}(-\eta) \quad \ldots(2-1)$$

$$\log i = \log i_0 + \frac{\alpha F}{2.303 RT}\,\eta \quad \dots (2\text{-}2)$$

In Equations (2-1) and (2-2), i represents a current density, $\alpha$ represents a transfer coefficient (0.5), and $\eta$ represents an over-voltage.

For example, the lithium diffusion coefficient ($D_{Li}$) can be measured using a Galvanostatic Intermittent Titration Technique (GITT) analysis and can be defined by Equation (3) below.

$$D_{Li} = \frac{4}{\pi\tau}\left(\frac{m_B V_M}{M_B S}\right)^2\left(\frac{\Delta E_S}{\Delta E_\tau}\right)^2 \dots (3)$$

In Equation (3), $\tau$: constant current pulse application time (sec), $m_B$: mass of cathode active material (g), $V_M$: molar volume of cathode active material ($cm^3$/mol), $M_B$: molar mass of cathode active material (g/mol), S: contact area ($cm^2$) between cathode active material and electrolyte, $\Delta E_S$: steady-state voltage change (volt), $\Delta E_\tau$: voltage change (volt) during constant current pulse application time with IR drop removed.

As described above, after measuring or plotting the charge transfer resistance and the lithium diffusion coefficients for each DOD of the individual active material particles, active material particles that satisfy the above-described ranges of the charge transfer resistance and the lithium diffusion coefficient at DOD 50% may be employed as a cathode active material.

In example embodiments, a method of preparing the cathode material is provided. Hereinafter, a method of preparing a cathode material including an active material core having an NCM-based lithium oxide composition will be described as an example.

In example embodiments, active material metal sources may be prepared. For example, the active material metal sources may include a nickel source, a manganese source and a cobalt source.

Examples of the nickel source include nickel sulfate ($NiSO_4$), nickel hydroxide ($Ni(OH)_2$), nickel nitrate ($Ni(NO_3)_2$), nickel acetate ($Ni(CH_3CO_2)_2$), a hydrate thereof, etc. Examples of the manganese source include manganese sulfate ($MnSO_4$), manganese hydroxide ($Mn(OH)_2$), manganese nitrate ($Mn(NO_3)_2$), manganese acetate ($Mn(CH_3CO_2)_2$, a hydrate thereof, etc. Examples of the cobalt source include cobalt sulfate ($CoSO_4$), cobalt hydroxide ($Co(OH)_2$), cobalt nitrate ($Co(NO_3)_2$), cobalt carbonate ($CoCO_3$), a hydrate thereof, etc.

Preferably, nickel sulfate, manganese sulfate and cobalt sulfate may be used as the nickel source, the manganese source and the cobalt source.

In some embodiments, a compound (e.g., hydroxide or oxide) including the above-described coating element or doping element may also be used.

In example embodiments, the above-described active material metal sources may be mixed and reacted by a co-precipitation method to obtain an active material precursor. For example, the active material precursor may be prepared in the form of a nickel-manganese-cobalt hydroxide.

A precipitating agent and/or a chelating agent may be used to facilitate the coprecipitation reaction. The precipitating agent may include an alkaline compound such as sodium hydroxide (NaOH), sodium carbonate ($Na_2CO_3$), etc. The chelating agent may include, e.g., ammonia water, ammonium carbonate, etc.

The active material precursor may be mixed with a lithium source and reacted by a heat-treatment to form lithium-nickel metal oxide particles. For example, a temperature of the heat treatment may be in a range from about 600°C to about 850°C.

The lithium source may include, e.g., lithium carbonate ($Li_2CO_3$), lithium nitrate ($LiNO_3$), lithium acetate ($CH_3COOLi$), lithium oxide ($Li_2O$), lithium hydroxide (LiOH), etc. These may be used alone or in a combination of two or more therefrom. In an embodiment, lithium hydroxide may be used as the lithium source.

In some embodiments, impurities (a residual lithium) such as LiOH and $Li_2CO_3$ may remain on the surface of the active material core particles including the lithium metal oxide.

According to the disclosure of the present application, the above-described surface coating may be formed by a semi-dry method.

In example embodiments, a sulfur source and a metal source may be mixed with the active material core particles prepared as described above and 10 wt% or less of water based on the total weight of the active material core particles. Thereafter, the sulfur-containing coating and the metal-containing coating may be formed by stirring for a predetermined time and performing a heat treatment.

In some embodiments, an input amount of water may be 8 wt% or less, 7 wt% or less, 6 wt% or less, or 5 wt% or less, based on the total weight of the active material core particles. In consideration of the coating and stirring efficiency, the input amount of water may be 0.5 wt% or more, 1 wt% or more, 1.5 wt% or more, or 2 wt% or more based on the total weight of the active material core particles.

For example, the input amount of water may be in a range from 0.5 wt% to 10 wt%, from 1 wt% to 8 wt%, from 1 wt% to 7 wt%, from 1 wt% to 6 wt%, or from 1 wt% to 5 wt% based on the total weight of the active material core particles.

In a comparative example, a wet coating may be performed to form a surface coating using an excess amount of water (e.g., 100 wt% or more based on the total weight of the active material core particles). In this case, the lithium impurities (the residual lithium) remaining on the active material core particles may be effectively removed.

However, the excess amount of water may penetrate into the active material core particles and transform the layered crystal structure into a cubic structure or a spinel structure. Accordingly, the capacity characteristics of the cathode active material may be reduced or changed, and the life-span characteristics of the cathode active material may be deteriorated.

Additionally, a large amount of a coating source may also penetrate into the active material core particle together with the excess amount of water to reduce the amount of the surface coating. Accordingly, sufficient electrical conductivity and ion conductivity from the coating on the surface of the active material particles may not be implemented.

In a comparative example, the surface coating may be formed by a dry coating (e.g., using a ball-mill) without using water. In this case, a non-uniform coating may be formed by a particle agglomeration, and the residual lithium may not be sufficiently removed.

However, according to embodiments disclosed in the present application, the semi-wet coating may be performed using the reduced amount of water in the above-described range. Therefore, the amount of coating material may be concentrated on the surface of the active material particle while sufficiently removing the residual lithium. Further, the modification of the crystal structure of the layered active material particle in the coating process may be prevented and the desired capacity characteristics of the cathode active material may be maintained.

In some embodiments, after mixing the active material core particles, water and the coating source, a heat treatment may be performed immediately without a filtration process. Accordingly, loss of the coating source and damages to the crystal structure may be suppressed, and an input amount of the coating source may be substantially maintained in the surface coating.

In embodiments, an ammonium group-containing sulfur compound and an ammonium group-containing metal compound may be used as the sulfur source and the metal source, respectively. For example, ammonium sulfate $((NH_4)_2SO_4)$ may be used as the sulfur source, and ammonium para-tungsten, ammonium meta-tungsten, etc., may be used as the metal source including a tungsten source.

Sufficient dispersibility and coating uniformity may be achieved even through the semi-wet coating process using the reduced amount of water by utilizing the sulfur and metal sources commonly having ammonium groups.

In an embodiment, a temperature of the heat treatment may be in a range from 300°C to 500 °C, or from 350 °C to 450 °C.

An input amount of the coating source input may be adjusted to satisfy the above-described range of sulfur and metal coating amounts.

<Lithium Secondary Battery>

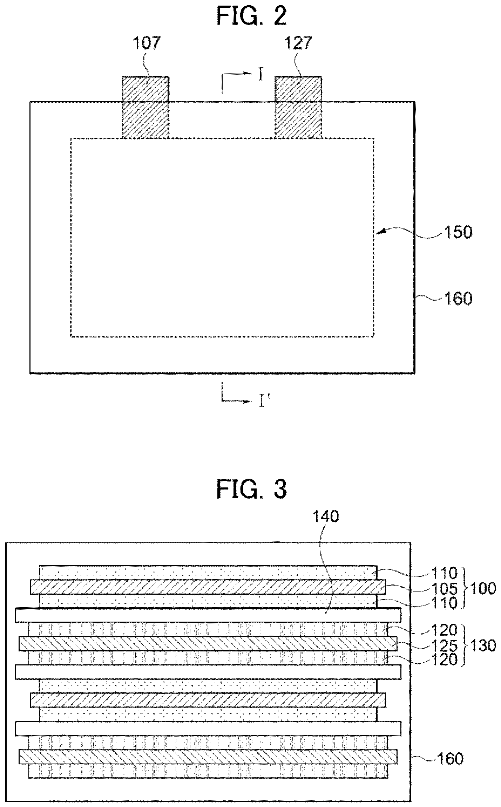

FIG. 2 and FIG. 3 are a schematic plan view and a cross-sectional view, respectively, illustrating a lithium secondary battery in accordance with example embodiments. For example, FIG. 2 is a cross-sectional view taken along a line I-I' of FIG. 1 in a thickness direction.

Referring to FIGS. 2 and 3, a lithium secondary battery may include an electrode assembly including a cathode 100 and an anode 130. In some embodiments, the electrode assembly may further include a separator 140 interposed between the cathode and the anode. The electrode assembly may be accommodated together with an electrolyte solution in a case 160 to be impregnated therein.

The cathode 100 may include a cathode active material layer 110 formed by coating the above-described cathode active material on a cathode current collector 105. For example, a cathode mixture may be prepared by mixing and stirring the above-described cathode active material with a binder, a conductive material, a thickener and/or a dispersive agent in a solvent. The cathode mixture may be coated on the cathode current collector 105, and then dried and pressed to prepare the cathode 100.

Non-limiting examples of the solvent used to prepare the cathode mixture may include N-methyl-2-pyrrolidone (NMP), dimethylformamide, dimethylacetamide, N, N-dimethylaminopropylamine, ethylene oxide, tetrahydrofuran, etc.

The cathode current collector 105 may include, e.g., stainless steel, nickel, aluminum, titanium, copper or an alloy thereof. For example, the cathode current collector 105 may include aluminum or an aluminum alloy.

The binder may include polyvinylidene fluoride (PVDF), vinylidene fluoride-hexafluoropropylene copolymer, polyacrylonitrile, polymethylmethacrylate, acrylonitrile-butadiene rubber (NBR), polybutadiene rubber (BR), styrene-butadiene rubber (SBR), etc. In an embodiment, a PVDF-based binder may be used as the cathode binder.

The conductive material may be added to enhance conductivity and/or mobility of lithium ions or electrons of a cathode mixture layer. For example, the conductive material may include a carbon-based conductive material such as graphite, carbon black, acetylene black, ketjen black, graphene, a carbon nanotube, a vapor-grown carbon fiber (VGCF), a carbon fiber, and/or a metal-based conductive material including tin, tin oxide, titanium oxide, a perovskite material such as $LaSrCoO_3$, $LaSrMnO_3$, etc.

For example, carboxymethyl cellulose (CMC) may be used as the thickener.

The anode 130 may include an anode current collector 125 and an anode active material layer 120 formed by coating an anode active material on the anode current collector 125.

Non-limiting examples of the anode current collector 125 may include a copper foil, a nickel foil, a stainless steel foil, a titanium foil, a nickel foam, a copper foam, a polymer substrate coated with a conductive metal, etc.

A material capable of adsorbing and de-intercalating lithium ions may be used as the anode active material above. For example, the anode active material may include a carbon-based material such as a crystalline carbon, an amorphous carbon, a carbon composite, a carbon fiber, etc.; a lithium metal; a lithium alloy; a silicon (Si)-containing material or a tin (Sn)-containing material, etc.

Examples of the amorphous carbon include hard carbon, soft carbon, coke, a mesocarbon microbeads (MCMB), a mesophase pitch-based carbon fiber (MPCF), etc.

Examples of the crystalline carbon include a graphite-based carbon such as natural graphite, artificial graphite, a graphitized coke, a graphitized MCMB, a graphitized MPCF, etc.

The lithium metal may include a pure lithium metal or a lithium metal on which a protective layer for suppressing a dendrite growth is formed. In an embodiment, a lithium metal-containing layer deposited or coated on the cathode current collector may be used as the anode active material layer. In an embodiment, a lithium thin layer may be used as the anode active material layer.

Elements included in the lithium alloy may include aluminum, zinc, bismuth, cadmium, antimony, silicon, lead, tin, gallium, indium, etc.

The silicon-containing active material may provide more increased capacity characteristics. The silicon-containing active material may include Si, SiOx (0<x<2), a silicon-carbon composite, a silicate or SiOx (0<x<2) doped with a metal, etc. The metal may include lithium and/or magnesium.

For example, an anode mixture may be prepared by dispersing the anode active material in a solvent. The anode mixture may be coated on the anode current collector, dried and pressed to prepare the anode. The anode mixture may further include a binder, and optionally may further include a conductive material, a thickener, etc.

In some embodiments, the anode may include an anode active material layer in the form of a lithium metal formed through a deposition/coating process.

Non-limiting examples of the solvent for the anode mixture include water, pure water, deionized water, distilled water, ethanol, isopropanol, methanol, acetone, n-propanol, t-butanol, etc.

The above-described materials that may be used in the fabrication of the cathode may also be used as the binder, the conductive material and the thickener.

In some embodiments, the anode binder may include a styrene-butadiene rubber (SBR)-based binder, carboxymethyl cellulose (CMC), a polyacrylic acid-based binder, a poly(3,4- ethylenedioxythiophene) (PEDOT)-based binder, etc.

In some embodiments, a separator 140 may be interposed between the cathode 100 and the anode 130. The separator may prevent an electrical short circuit between the cathode 100 and the anode 130 while maintaining a flow of ions.

For example, the separator 140 may include a porous polymer film or a porous non-woven fabric. The porous polymer film may include a polyolefin-based polymer such as an ethylene polymer, a propylene polymer, an ethylene/-butene copolymer, an ethylene/hexene copolymer, an ethylene/methacrylate copolymer, etc. The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or multi-layered structure including the polymer film and/or the non-woven fabric as described above.

In example embodiments, the cathode 100, the anode 130 and the separator 140 may be repeatedly arranged to form an electrode assembly 150. In some embodiments, the electrode assembly 150 may have a jelly-roll shape formed by winding or z-folding of the separator 140.

In an embodiment, the electrode assembly 150 may have a jelly roll shape formed by winding the cathode 100, the anode 130 and the separator 140 together. In an embodiment, the electrode assembly 150 may have a jelly roll shape in which notched cathodes and the anodes are disposed in spaces formed by repeatedly z-folding of the separator 140.

In an embodiment, the electrode assembly may be formed by repeatedly stacking the cathode 100, the anode 130 and the separator 140 which are cut or separated from each other at each level.

For example, electrode tabs (a cathode tab and an anode tab) may protrude from the cathode current collector 105 and the anode current collector 125 to one side of the case 160. The electrode tabs may be welded together with the one side of the case 160 to be connected to an electrode lead (a cathode lead 107 and an anode lead 127) that may be extended or exposed to an outside of the case 160.

For example, the case 160 may include a pouch-type case, a prismatic case, a coin-type case, etc.

The electrode assembly 150 may be accommodated within the case 160 together with an electrolyte solution to define a lithium secondary battery. In example embodiments, a non-aqueous electrolyte solution may be used as the electrolyte solution.

The non-aqueous electrolyte solution may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N$; $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include an organic compound that has a sufficient solubility of the lithium salt and an additive and is not reactive in the battery. The organic solvent may include, e.g., at least one of a carbonate-based solvent, an ester-based solvent, an ethyl-based solvent, a ketone-based solvent, an alcohol-based solvent, and/or an aprotic solvent.

Examples of the organic solvent include propylene carbonate (PC), ethylene carbonate (EC), butylene carbonate, diethyl carbonate (DEC), dimethyl carbonate. DMC), ethyl methyl carbonate (EMC), methylpropyl carbonate, ethylpropyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethylsulfoxide, acetonitrile, diethoxyethane, sulfolane, gamma-butyrolactone, propylene sulfite, etc. These may be used alone or in a combination of two or more therefrom.

The non-aqueous electrolyte solution may further include the additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compounds include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separator 140.

The solid electrolyte may include a sulfide-based electrolyte. Non-limiting examples of the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z is Ge, Zn or Ga), $Li_2S$-$GeS_2$, $Li_2S$-$SiS_2$-$Li_3PO_4$, $Li_2S$-$SiS_2$-$Li_pMO_q$, (p and q are positive numbers, M is P, Si, Ge, B, Al, Ga or In), $Li_{7}$-$xPS_{6-x}Cl_x$ ($0 \leq x \leq 2$), $Li_{7-x}PS_{6-x}Br_x$ ($0 \leq x \leq 2$), $Li_{7-x}PS_{6-x}I_x$ ($0 \leq x \leq 2$), etc. These may be used alone or in a combination thereof.

In an embodiment, the solid electrolyte may include, e.g., an oxide-based amorphous solid electrolyte such as $Li_2O$-$B_2O_3$-$P_2O_5$, $Li_2O$-$SiO_2$, $Li_2O$-$B_2O_3$, $Li_2O$-$B_2O_3$-ZnO, etc.

Hereinafter, embodiments of the present disclosure are described in more detail with reference to experimental examples.

Example 1

Lithium-nickel metal oxide particles having a composition of $Li[Ni_{0.88}Co_{0.09}Mn_{0.03}]O_2$ were prepared (hereinafter, referred to as active material core particles).

A surface coating was formed on the active material core particle by a semi-wet process. Specifically, $(NH_4)_2SO_4$ as a sulfur source for forming a sulfur-containing coating on the active material core particles and $(NH_4)_{10}H_2(W_2O_7)_6 \cdot 4H_2O$ as a tungsten source for forming a tungsten-containing coating (metal-containing coating) were added to satisfy contents shown in Table 1, and then 5 wt% of water was added based on a total weight of the active material core particles.

After stirring for a predetermined time, the active material particles having the surface coating formed thereon were obtained by a thermal treatment at 400°C.

A cathode mixture was prepared by mixing the cathode active material, Denka Black as a conductive material and PVDF as a binder in a mass ratio of 94:3:3, respectively. The cathode mixture was coated on an aluminum current collector, and then dried and pressed to prepare a cathode. An electrode density of the cathode after the pressing was adjusted to 3.5 g/cc or more.

An anode slurry including 93 wt% of natural graphite as an anode active material, 5 wt% of KS6 as a flake-type conductive material, 1 wt% of styrene-butadiene rubber (SBR) as a binder and 1 wt% of carboxymethyl cellulose (CMC) as a thickener was prepared. The anode slurry was coated, dried and pressed on a copper substrate to prepare an anode.

The cathode and the anode prepared as described above were notched, and stacked with a separator (polyethylene, thickness: 25 $\mu$m) interposed therebetween in a zigzag shape to form an electrode assembly.

Tab portions of the cathode and the anode were welded, and the welded electrode assembly was placed in a pouch, and three sides except for the electrolyte injection side were sealed. A region around the electrode tab was included in the sealing portion. An electrolyte solution was injected through the electrolyte injection side, and the electrolyte injection side was also sealed and impregnated for 12 hours or more.

A 1M $LiPF_6$ solution was produced using a mixed solvent of EC/EMC/DEC (25/45/30; volume ratio), and then 1 wt% of fluoroethylene carbonate (FEC), 0.5 wt% of PS (1,3-propane sultone), and 0.3 wt% of prop-1-ene-1,3-sultone (PRS) were added to prepare the electrolyte solution.

Examples 2 and 3

As shown in Table 1, a cathode active material and a secondary battery were manufactured by the same method as that in Example 1, except that an amount of the tungsten source was adjusted so that a tungsten content was measured.

Example 4

A cathode active material and a secondary battery were manufactured by the same method as that Example 1, except that a niobium (Nb) source ($Nb_2O_5$) instead of the tungsten source was used to measure a niobium content as shown in Table 1.

Example 5

A cathode active material and a secondary battery were manufactured by the same method as that in Example 1, except that a molybdenum (Mo) source (($NH_4)_6Mo_7O_{24}$) instead of the tungsten source was used to measure a molybdenum content as shown in Table 1.

Examples 6 and 7

A cathode active material and a secondary battery were manufactured by the same method as that in Example 1, except that amounts of a sulfur source and a tungsten source were adjusted to measure a sulfur content and a tungsten content as shown in Table 1.

Comparative Example 1

A cathode active material and a secondary battery were manufactured by the same method as that in Example 1, except that the formation of the surface coating was omitted.

Comparative Example 2

A cathode active material and a secondary battery were manufactured by the same method as that in Example 1, except that the formation of the tungsten-containing coating was omitted.

Comparative Example 3 and Comparative Example 4

A cathode active material and a secondary battery were manufactured by the same method as that in Example 1, except that the formation of the sulfur-containing coating was omitted, and an amount of the tungsten source was adjusted to measure a tungsten (W) content as shown in Table 1.

Comparative Example 5

A cathode active material and a secondary battery were manufactured by the same method as that in Example 1, except that the surface coating was formed through a wet process using 100 wt% of water based on the weight of the active material core particles, a filtration, a drying and a heat-treatment.

Experimental Example

(1) Measurement of sulfur content and coating metal content

A sulfur content and a coating metal content contained in each cathode active material of Examples and Comparative Examples were measured using an ICP analysis instrument (Inductively Coupled Plasma-Optical Emission Spectroscopy, Agilent 5800).

(2) Measurement of individual particle charge transfer resistance ($R_{ct}$) and lithium diffusion coefficient ($D_{Li}$)

Ae charge transfer resistance of an individual particle of the cathode active material was measured using the measurement apparatus as illustrated in FIG. 1.
Specifically, the individual particle was in contact with a gold (Au)-coated microelectrode having a size of 10 $\mu$m using a microscope. Charging and discharging were performed through Galvanostat under the following conditions.

electrolyte solution: 1 mol dm$^{-3}$ LiClO$_4$ (1:1=EC:PC, volume ratio)
counter electrode: Li foil
cut off voltage: 4.3 to 3.0 V

Initial charging/discharging: CC 0.1C/0.1C

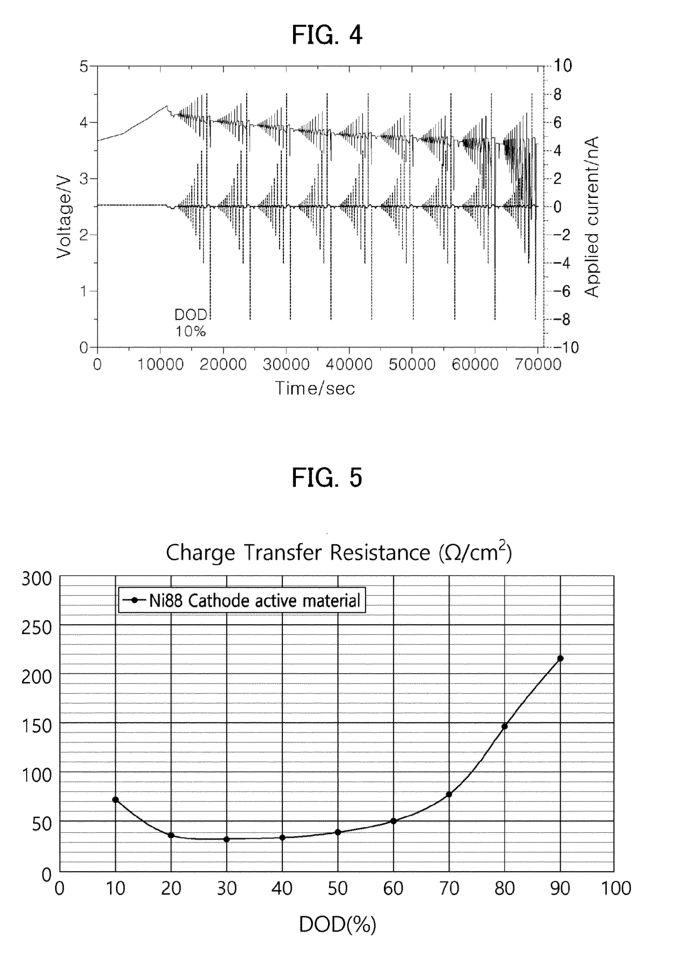

Charging and discharging were repeated by applying charging and discharging pulses corresponding to currents of 0.2 nA, 0.4 nA, 0.6 nA, 0.8 nA, 1.0 nA, 1.5 nA, 2 nA and 4 nA in a predetermined DOD state.
As shown in FIG. 4, a charge pulse was applied to each DOD according to a hybrid pulse power characterization (HPPC) protocol, and a discharge pulse was applied after adjusting the DOD. The solid line is the voltage and the dotted line is the current.
A Tafel plot was performed according to the pulse current in each DOD state. A charge transfer resistance ($R_{ct}$) and a lithium diffusion coefficient ($D_{Li}$) for each DOD were calculated through the Tafel plot, and the charge transfer resistance and the lithium diffusion coefficient in a state of DOD 50% state were extracted.

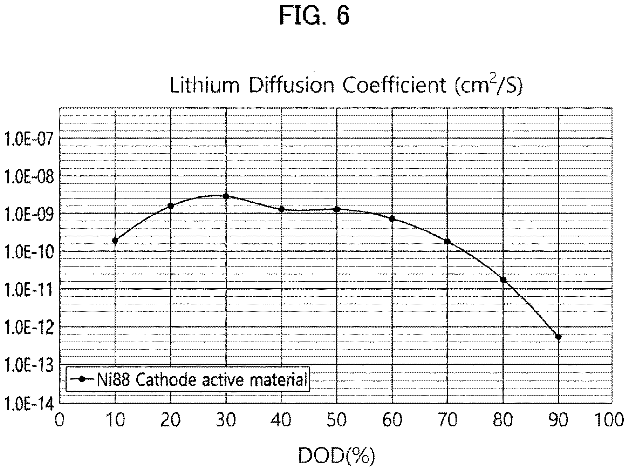

FIGS. 5 and 6 are graphs of a charge transfer resistance ($R_{ct}$) and a lithium diffusion coefficient ($D_{Li}$) for each DOD measured using a cathode active material of Example 1, respectively.

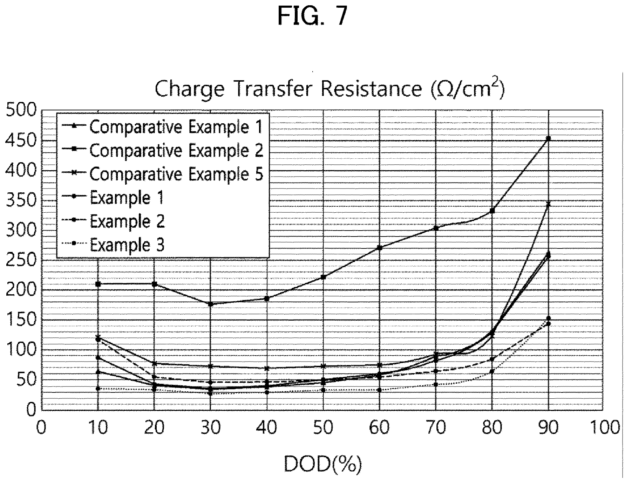

FIG. 7 is a graph showing charge transfer resistances for each DOD of Examples and Comparative Examples.

(3) Evaluation on gas generation

Each lithium secondary batteries of Examples and Comparative Examples was charged (CC-CV 1.0C 4.20V 0.1C cut-off) to 100% of a state of charge (SoC) and stored in a chamber at 60°C. After storage for 16 weeks, the lithium secondary battery was taken out of the chamber and an amount of gas generation was measured using gas chromatography. Specifically, a hole was formed in the vacuum chamber having a predetermined volume (V) to measure a total amount of generated gas, and a gas generation volume was calculated by measuring a pressure change and evaluated as follows.

O: Less than 60 mL of gas generation
Δ: 60 mL to 80 mL of gas generation
X: More than 80 mL of gas generation

(4) Measurement of residual lithium (LiOH. Li$_2$CO$_3$)

5.0 g of the cathode active material prepared in each of Examples and Comparative Examples and 100 g of deionized water were placed in a 250 mL flask, and then stirred at a rate of 100 rpm for 10 minutes. The obtained dispersion was filtered through a vacuum flask, and 100 g was collected. The collected dispersion was introduced into an automatic titrator. Based on a Warder method, lithium hydroxide (LiOH) and lithium carbonate (Li$_2$CO$_3$) values in the dispersion were measured and evaluated according to the following criteria.

O: Contents of LiOH and $Li_2CO_3$ were less than 6,000 ppm
Δ: Contents of LiOH and $Li_2CO_3$ was 6,000 ppm or more and less than 8,000 ppm
X: Contents of LiOH and $Li_2CO_3$ were 8,000 ppm or more

(5) Evaluation on resistance after high temperature cycle (DC-IR measurement)

2 cycles of charge/discharge (SOC 100%) was performed at a CC-CV condition at 45°C and 0.5C, and then 0.5C discharge was performed until SOC reached 50% after charging again at a CC-CV condition of 0.5C. Thereafter, a voltage (a first voltage) was measured after standing for 30 minutes. Subsequently, a voltage (a second voltage) was measured after i) 1C, discharging for 10 seconds, standing for 40 seconds, ii) 0.75C, charging for 10 seconds, and standing for 40 seconds. A DC-IR (reference value) was measured using a difference between the first voltage and the second voltage. 500 cycles of 1C/1C charge/discharge were performed at 45°C, and a DC-IR was measured by the above-described method. A DC-IR increase ratio was calculated using the reference value.

(6) Capacity retention after high temperature (60°C) storage

Each battery of Examples and Comparative Examples was charged to a state of charge (SoC) 100% (CC-CV 0.5C 4.20V 0.1C Cut-off). A discharge capacity was measured in a 25°C chamber after being stored in a 60°C chamber for 16 weeks. A discharge capacity retention (%) relative to an initial discharge capacity was evaluated.

The evaluation results are shown together in Table 1 and Table 2.

[Table 1]

| | sulfur-containing coating | metal-containing coating | coating method | charge transfer resistance ($R_{ct}$) ($\Omega/cm^2$) | lithium diffusion coefficient ($D_{Li}$) | gas generation |
|---|---|---|---|---|---|---|
| Example 1 | S 2000 ppm | W 3000 ppm | semi-wet | 48.7 | 2.31E-09 | O (44 ml) |
| Example 2 | S 2000 ppm | W 5000 ppm | semi-wet | 48.1 | 3.93E-09 | O (40 ml) |
| Example 3 | S 2000 ppm | W 7000 ppm | semi-wet | 32.7 | 2.90E-09 | O (43 ml) |
| Example 4 | S 2000 ppm | Nb 5000 ppm | semi-wet | 33.5 | 2.30E-09 | O (39 ml) |
| Example 5 | S 2000 ppm | Mo 5000 ppm | semi-wet | 35.2 | 2.40E-09 | O (41 ml) |
| Example 6 | S 800 ppm | W 2500 ppm | semi-wet | 38.7 | 2.30E-09 | Δ (62 ml) |
| Example 7 | S 5000 ppm | W 8000 ppm | semi-wet | 54.3 | 1. 12E-09 | O (36 ml) |
| Comparative Example 1 | X | X | X | 44.1 | 1.36E-09 | X (102 ml) |
| Comparative Example 2 | S 2000 ppm | X | semi-wet | 220.8 | 1.25E-09 | Δ (77 ml) |
| Comparative Example 3 | X | W 5000 ppm | semi-wet | 52.3 | 1.30E-09 | X (108 ml) |
| Comparative Example 4 | X | W 10000 ppm | semi-wet | 25.6 | 5.80E-10 | X (106 ml) |
| Comparative Example 5 | S 2000 ppm | W 3000 ppm | wet | 72.1 | 1.02E-09 | X (122 ml) |

[Table 2]

| | sulfur-containing coating | metal-containing coating | coating method | residual lithium | 16-week storage capacity retention (%) | 500 cycles DC-IR increase ratio |
|---|---|---|---|---|---|---|
| Example 1 | S 2000 ppm | W 3000 ppm | semi-wet | O | 91.2 | 141 |
| Example 2 | S 2000 ppm | W 5000 ppm | semi-wet | O | 92.0 | 138 |

(continued)

| | sulfur-containing coating | metal-containing coating | coating method | residual lithium | 16-week storage capacity retention (%) | 500 cycles DC-IR increase ratio |
|---|---|---|---|---|---|---|
| Example 3 | S 2000 ppm | W 7000 ppm | semi-wet | ○ | 91.5 | 139 |
| Example 4 | S 2000 ppm | Nb 5000 ppm | semi-wet | ○ | 92.5 | 135 |
| Example 5 | S 2000 ppm | Mo 5000 ppm | semi-wet | ○ | 91.6 | 134 |
| Example 6 | S 800 ppm | W 2500 ppm | semi-wet | ○ | 89.8 | 188 |
| Example 7 | S 5000 ppm | W 8000 ppm | semi-wet | ○ | 91.0 | 255 |
| Comparative Example 1 | X | X | X | X | 68 | 380 |
| Comparative Example 2 | S 2000 ppm | X | semi-wet | Δ | 82 | 300 |
| Comparative Example 3 | X | W 5000 ppm | semi-wet | X | 85 | 270 |
| Comparative Example 4 | X | W 10000ppm | semi-wet | X | 83 | 250 |
| Comparative Example 5 | S 2000 ppm | W 3000 ppm | wet | X | 72 | 250 |

Referring to Tables 1 and 2, improved lithium transfer and capacity characteristics were obtained from the lithium secondary batteries in which the cathode active materials of Examples including the individual particles with the charge transfer resistance of 60 $\Omega/cm^2$ or less were used. Additionally, the generation of residual lithium/gas was decreased, and the resistance was also decreased.

In Comparative Example 2 where only the sulfur-containing coating was formed, the electrical conductivity was decreased and the charge transfer resistance was rapidly increased. Accordingly, the capacity and resistance characteristics were also deteriorated.

In Comparative Examples 3 and 4 where only the metal-containing coating was formed, the residual lithium and the gas generation due to side reactions were increased. Particularly, in Comparative Example 4 where the amount of the metal coating was excessively increased without the sulfur-containing coating, the lithium mobility was excessively reduced.

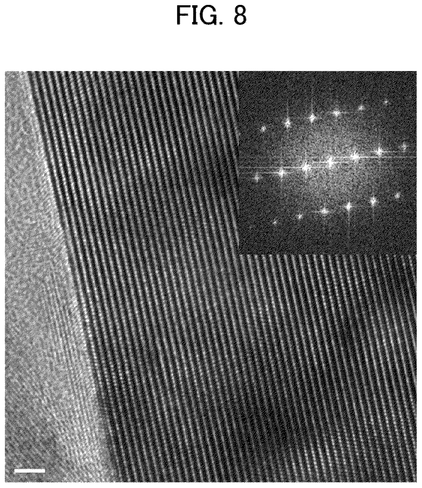

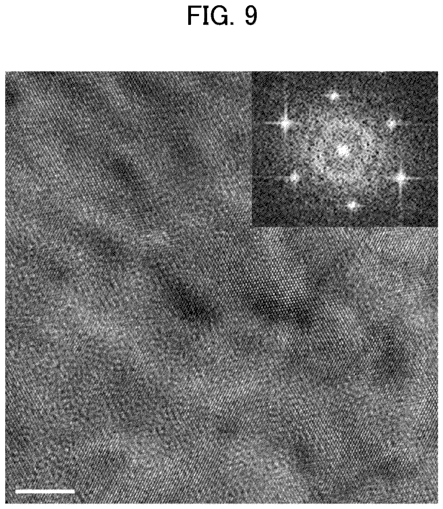

FIGS. 8 and 9 are transmission electron microscopy (TEM) images of inner cross-sections of active material particles of Example 1 and Comparative Example 5, respectively. In Examples, as shown in FIG. 8, a layered crystal structure of the anode active material was maintained. However, in Comparative Example 5 where the surface coating was formed by the wet process, a crystal structure of the active material particle was transformed into a cubic structure and a spinel structure while the coating solution penetrated into the secondary particles.

**Claims**

1. A cathode active material for a lithium secondary battery comprising an active material particle, wherein the active material particle comprises:

   an active material core including a lithium metal oxide; and
   a sulfur-containing coating and a metal-containing coating formed on the active material core,
   wherein a charge transfer resistance ($R_{ct}$) measured at 50% DOD (Depth of Discharge) by an individual contact of a measuring probe with the active material particle is 60 $\Omega/cm^2$ or less.

2. The cathode active material for a lithium secondary battery according to claim 1, wherein the metal-containing coating includes at least one of tungsten (W), molybdenum (Mo), niobium (Nb) and tantalum (Ta).

3. The cathode active material for a lithium secondary battery according to claim 1 or 2, wherein the sulfur-containing coating includes a lithium-containing sulfur oxide, and the metal-containing coating includes a lithium-tungsten oxide.

4. The cathode active material for a lithium secondary battery according to any one of claims 1 to 3, wherein a content of sulfur based on a weight of the active material core is in a range from 100 ppm to 5,000 ppm, and a content of a metal contained in the metal-containing coating based on the weight of the active material core is in a range from 1,000 ppm to 9,000 ppm.

5. The cathode active material for a lithium secondary battery according to any one of claims 1 to 3, wherein a content of sulfur based on a weight of the active material core is in a range from 1,000 ppm to 5,000 ppm, and a content of the metal contained in the metal-containing coating based on the weight of the active material core is in a range from 2,000 ppm to 8,000 ppm.

6. The cathode active material for a lithium secondary battery according to any one of claims 1 to 5, wherein the active material particle has a form of a secondary particle in which a plurality of primary particles are aggregated, and the sulfur-containing coating and the metal-containing coating are formed on an outer surface of the secondary particle.

7. The cathode active material for a lithium secondary battery according to claim 6, wherein the sulfur-containing coating and the metal-containing coating are also formed between the primary particles at an inside of the secondary particle.

8. The cathode active material for a lithium secondary battery according to claim 7, wherein a coating amount on the outer surface of the secondary particle of the sulfur-containing coating and the metal-containing coating is greater than that between the primary particles.

9. The cathode active material for a lithium secondary battery according to any one of claims 1 to 8, wherein $R_{ct}$ of the active material particle is in a range from 30 $\Omega$/cm$^2$ to 60 $\Omega$/cm$^2$.

10. The cathode active material for a lithium secondary battery according to any one of claims 1 to 9, wherein the active material core includes a lithium-nickel metal oxide, and a mole fraction of nickel based on the total number of moles of metals excluding lithium and oxygen in the lithium-nickel metal oxide is 0.8 or more.

11. A lithium secondary battery, comprising:

    a cathode including the cathode active material for a lithium secondary battery according to any one of claims 1 to 10; and
    an anode facing the cathode.

12. A method of preparing a cathode active material for a lithium secondary battery, comprising:

    preparing an active material core particle including a lithium metal oxide;
    mixing a sulfur source and a metal source with the active material core particle together with 10 wt% or less of water based on a weight of the active material core particle to form a mixture; and
    heat-treating the mixture.

13. The method of claim 12, wherein the heat-treating is performed without a filtration after forming the mixture.

14. The method of claim 12 or 13, wherein the sulfur source includes a sulfur compound containing an ammonium group, and the metal source includes a metal compound containing an ammonium group.

15. The method of any one of claims 12 to 14, wherein a content of water used in the formation of the mixture is 5 wt% or less based on the weight of the active material core particle.

# FIG. 1

# FIG. 2

# FIG. 3

# FIG. 4

# FIG. 5

## Charge Transfer Resistance ($\Omega/cm^2$)

# FIG. 6

Lithium Diffusion Coefficient ($cm^2$/S)

FIG. 7

Charge Transfer Resistance ($\Omega/cm^2$)

FIG. 8

## FIG. 9